# EUROPEAN PATENT APPLICATION

(11) **EP 4 604 018 A1**
(43) Date of publication of application: **20.08.2025**
(21) Application number: 24157509.1
(22) Date of filing: 14.02.2024
(51) Int. Cl.: G06N 3/0475, G06N 3/08, G06N 5/045

(54) **RULE GENERATION SYSTEM**

(71) Applicant: ABB SCHWEIZ AG, 5400 Baden (CH)
(72) Inventor: GITZEL, Ralf, 68165 Mannheim (DE); BORRISON, Reuben, 68782 Brühl (DE); GATTI, Callisto, 24021 Albino (IT); KOZEL, Tomas, 635 00 Brno (CZ); MEILI, Oliver, 5430 Wettingen (CH)
(74) Representative: Maiwald GmbH

(57) **Abstract**

The present invention relates to a rule generation system (100) for a low, medium or high voltage switchgear, comprising:
- a deterministic rule generator (10);
- an input unit (20); and
- an output unit (30);
wherein the input unit is configured to receive a request from an operator for a rule relating to operation of a switchgear;
wherein the input unit is configured to provide the request to the deterministic rule generator;
wherein the deterministic rule generator is configured to implement a large language model,
wherein the deterministic rule generator is configured to generate a switchgear operation rule, and wherein the generation of the switchgear operation rule comprises processing of the request by the large language model; and
wherein the output unit is configured to output the switchgear operation rule.

## Description

### FIELD OF THE INVENTION

The present invention relates to a rule generation system for a low, medium or high voltage switchgear, a rule utilization system for a low, medium or high voltage switchgear, a rule explanation system for a low, medium or high voltage switchgear, a rule generation method for a low, medium or high voltage switchgear, a rule utilization method for a low, medium or high voltage switchgear, a rule explanation method for a low, medium or high voltage switchgear, as well as a computer program element.

### BACKGROUND OF THE INVENTION

While the level of required knowledge for service personnel increases, a wave of new, young and inexperienced people arrive and need tools to support them. This applies to many technical fields, one example being (medium voltage) switchgears. Text and video can capture a lot of knowledge but are less helpful than a more interactive system.

Deterministic rules engine serves as a support tool for the service personnel that can guide them, based on the state of the machine (e.g., Switchgears) on what actions need to be performed to maintain a machine. This can be a series of instruction on smartphone or something deployed on the machine to be serviced. Deterministic rules engines depend on a collection of facts presented as rules (e.g., using Ontologies).

However, building the knowledge base is quite time intensive. Thus, all possible solutions have their own drawbacks.

There is a need to address these issues.

### SUMMARY OF THE INVENTION

Therefore, it would be advantageous to have an improved support tool for service personnel working on low, medium and high voltage switchgear.

The object of the present invention is solved with the subject matter of the independent claims, wherein further embodiments are incorporated in the dependent claims.

In a first aspect, there is provided a rule generation system for a low, medium or high voltage switchgear, comprising:
- a deterministic rule generator;
- an input unit; and
- an output unit.

The input unit is configured to receive a request from an operator for a rule relating to operation of a switchgear. The input unit is configured to provide the request to the deterministic rule generator. The deterministic rule generator is configured to implement a large language model. The deterministic rule generator is configured to generate a switchgear operation rule, and the generation of the switchgear operation rule comprises processing of the request by the large language model. The output unit is configured to output the switchgear operation rule.

Thus, a new technique is provided that makes use of a Large Language Model (LLM) such as ChatGPT to determine switchgear operation rules that can then be used, for example in a deterministic rule engine, to support service personnel to guide them when working on a switchgear.

It is to be noted that when reference is made to a rule generation system for a low, medium or high voltage switchgear, this relates to a system to generate switchgear operations rules that relate to multiple different parts of the switchgear, such as: circuit breakers; earthing switches; disconnector switches; racking system; wiring circuits. In other words, rules that relate to a multitude of different service and operation requirements that are performed on switchgears.

In an example, the request is in a natural language.

In an example, the switchgear operation rule comprises computational code.

In an example, the switchgear operation rule comprises natural language.

In an example, the processing of the request by the large language model comprises generation of a preliminary switchgear operation rule. The output unit is configured to output the preliminary switchgear operation rule. The input unit is configured to receive an edit request from the operator for an edit to the preliminary switchgear operation rule. The generation of the switchgear operation rule comprises processing of the edit request by the large language model.

In this manner, human feedback is provided to fine tune the output of the LLM, thereby in effect validating the output of the LLM and mitigating the situation that can arise where LLMs generate incorrect or unreliable facts.

To put this another way, the LLM assists/guides an operator in the generation of rules that can be saved in a database, which can then be used to answer queries from the operator or other operator when working on the switchgear.

In an example, the preliminary switchgear operation rule comprises computational code.

In an example, the preliminary switchgear operation rule comprises natural language.

In an example, the edit request is in a natural language.

In an example, the large language model has been trained on a plurality of example rules relating to operation of the switchgear and associated domain information.

To put this another way, the LLM is finetuned/trained through the provision of contextual information in the form of examples and domain information, that could be in the form of vector embeddings, in order that desired results are generated.

In a second aspect, there is provided a rule utilization system for a low, medium or high voltage switchgear, comprising:
- a rule generation system according to the first aspect;
- a deterministic rule engine;
- an input unit; and
- an output unit.

The rule generation system is configured to generate a plurality of rules relating to operation of a switchgear. The rule generation system is configured to provide the plurality of rules to the deterministic rule engine. The input unit is configured to receive a request from an operator relating to operation of a switchgear. The input unit is configured to provide the request to the deterministic rule engine. The deterministic rule engine is configured to generate an operation action for the switchgear, and the generation of the operator action comprises utilization of the plurality of rules and the request. The output unit is configured to output the operation action.

Thus, the rule utilization system, that can be considered to be a deterministic rule engine, used by service personnel in order to gain guidance on how to service a switchgear can make use of rules generated by a rule generation system. In other words, a knowledge base used by the rule utilization system (the deterministic rule engine) is artificially generated, whereas normally the generation of this knowledge base is very difficult and very time consuming.

It is to be noted that when reference is made to a rule utilization system for a low, medium or high voltage switchgear, this relates to a system to utilize switchgear operations rules that relate to multiple different parts of the switchgear, such as: circuit breakers; earthing switches; disconnector switches; racking system; wiring circuits. In other words, rules that relate to a multitude of different service and operation requirements that are performed on switchgears.

In an example, the request is in a natural language.

In an example, the operation action is in a natural language.

In a third aspect, there is provided a rule explanation system for a low, medium or high voltage switchgear, comprising:
- a deterministic rule explainer;
- an input unit; and
- an output unit.

The input unit is configured to receive a request from an operator for a rule relating to operation of a switchgear. The input unit is configured to provide the request to the deterministic rule explainer. The deterministic rule explainer is configured to implement a large language model. The deterministic rule explainer is configured to determine a switchgear operation rule and generate an explanation of the switchgear operation rule, and the determination and generation comprises processing of the request by the large language model. The output unit is configured to output the explanation of the switchgear operation rule.

In this manner, the rule explanation system is able to explain existing rule in a natural language, and a developer doesn't have to read and understand the code associated q with a rule in order to determine what the rule does.

It is to be noted that when reference is made to a rule explanation system for a low, medium or high voltage switchgear, this relates to a system to explain switchgear operations rules that relate to multiple different parts of the switchgear, such as: circuit breakers; earthing switches; disconnector switches; racking system; wiring circuits. In other words, rules that relate to a multitude of different service and operation requirements that are performed on switchgears.

In an example, the request comprises natural language.

In an example, the request comprises computational code.

In an example, the explanation comprises natural language.

In an example, the explanation comprises computational code.

In an example, the processing of the request by the large language model comprises generation of a preliminary explanation of the switchgear operation rule. The output unit is configured to output the preliminary explanation of the switchgear operation rule. The input unit is configured to receive an edit request from the operator for an edit to the preliminary explanation of the switchgear operation rule. The generation of the explanation of the switchgear operation rule comprises processing of the edit request by the large language model.

In an example, the preliminary explanation of the switchgear operation rule comprises computational code.

In an example, the preliminary explanation of the switchgear operation rule comprises natural language.

In an example, the edit request is in a natural language.

In an example, the large language model has been trained on a plurality of example rules relating to operation of the switchgear and associated domain information.

In a fourth aspect, there is provided a rule generation method for a low, medium or high voltage switchgear, comprising:
- receiving by an input unit a request from an operator for a rule relating to operation of a switchgear;
- providing the request to a deterministic rule generator, and wherein the deterministic rule generator is configured to implement a large language model,
- generating by the deterministic rule generator a switchgear operation rule, and wherein the generating the switchgear operation rule comprises processing the request by the large language model; and
- outputting by an output unit the switchgear operation rule.

In an example, the request is in a natural language.

In an example, the switchgear operation rule comprises computational code.

In an example, the switchgear operation rule comprises natural language.

In an example, the method comprises generating a preliminary switchgear operation rule, and outputting by the output unit the preliminary switchgear operation rule, and receiving by the input unit an edit request from the operator for an edit to the preliminary switchgear operation rule, and wherein the generating the switchgear operation rule comprises processing the edit request by the large language model.

In an example, the preliminary switchgear operation rule comprises computational code.

In an example, the preliminary switchgear operation rule comprises natural language.

In an example, the edit request is in a natural language.

In an example, the large language model has been trained on a plurality of example rules relating to operation of the switchgear and associated domain information.

In a fifth aspect, there is provided a rule utilization method for a low, medium or high voltage switchgear, comprising:
- generating by a rule generating system according to the rule generation method of the fourth aspect a plurality of rules relating to operation of a switchgear;
- providing by the rule generating system the plurality of rules to a deterministic rule engine;
- receiving by an input unit a request from an operator relating to operation of a switchgear;
- providing by the input unit the request to the deterministic rule engine;
- generating by the deterministic rule engine an operation action for the switchgear, and wherein the generating the operator action comprises utilizing the plurality of rules and the request; and
- outputting by an output unit the operation action.

In an example, the request is in a natural language.

In an example, the operation action is in a natural language.

In a sixth aspect, there is provided a rule explanation method for a low, medium or high voltage switchgear, comprising:
- receiving by an input unit a request from an operator for a rule relating to operation of a switchgear;
- providing by the input unit the request to a deterministic rule explainer, and wherein the deterministic rule explainer is configured to implement a large language model,
- determining by the deterministic rule explainer a switchgear operation rule and generating by the deterministic rule explainer an explanation of the switchgear operation rule, and wherein the determination and generation comprises processing the request by the large language model; and
- outputting by an output unit the explanation of the switchgear operation rule.

In an example, the request comprises natural language.

In an example, the request comprises computational code.

In an example, the explanation comprises natural language.

In an example, the explanation comprises computational code.

In an example, the method comprises generating a preliminary explanation of the switchgear operation rule, and outputting by the output unit the preliminary explanation of the switchgear operation rule, and receiving by the input unit an edit request from the operator for an edit to the preliminary explanation of the switchgear operation rule, and wherein the generation the explanation of the switchgear operation rule comprises processing the edit request by the large language model.

In an example, the preliminary explanation of the switchgear operation rule comprises computational code.

In an example, the preliminary explanation of the switchgear operation rule comprises natural language.

In an example, the edit request is in a natural language.

In an example, the large language model has been trained on a plurality of example rules relating to operation of the switchgear and associated domain information.

In a seventh aspect, there is provided a computer program element for controlling a processor to carry out the method according to the fourth aspect.

In an example, there is provided a computer readable medium having stored the computer element of the seventh aspect.

In an eighth aspect, there is provided a computer program element for controlling a processor to carry out the method according to the fifth aspect.

In an example, there is provided a computer readable medium having stored the computer element of the seventh aspect.

In a ninth aspect, there is provided a computer program element for controlling a processor to carry out the method according to the sixth aspect.

In an example, there is provided a computer readable medium having stored the computer element of the seventh aspect.

The computer program elements can for example be a software program but can also be a FPGA, a PLD or any other appropriate digital means.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows an exemplar rule generation system;
Fig. 2 shows an exemplar rule utilization system;
Fig. 3 shows an exemplar rule explanation system, where the rule generation system can operate as the rule explanation system;
Fig. 4 shows a detailed example of a rule generation system;
Fig. 5 shows an exemplar interaction of a developer with a rule generation system - also termed a Rules Co-Pilot, and
Fig. 6 shows an exemplar interaction of a developer with a rule generation system that is now operating as a rule explanation system.

### DETAILED DESCRIPTION OF EMBODIMENTS

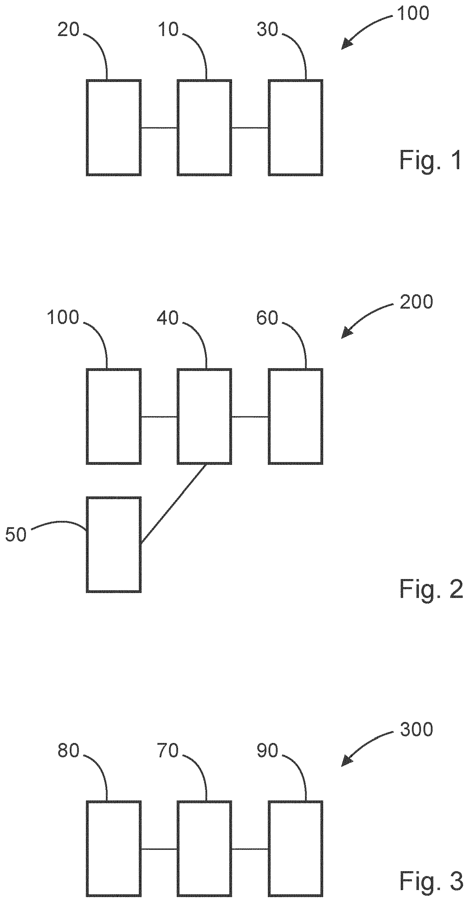

Fig. 1 shows an example rule generation system 100 for a low, medium or high voltage switchgear, comprising:
- a deterministic rule generator 10;
- an input unit 20; and
- an output unit 30.

The input unit is configured to receive a request from an operator for a rule relating to operation of a switchgear. The input unit is configured to provide the request to the deterministic rule generator. The deterministic rule generator is configured to implement a large language model. The deterministic rule generator is configured to generate a switchgear operation rule, and the generation of the switchgear operation rule comprises processing of the request by the large language model. The output unit is configured to output the switchgear operation rule.

Thus, a new technique is provided that makes use of a Large Language Model (LLM) such as ChatGPT to determine switchgear operation rules that can then be used, for example in a deterministic rule engine, to support service personnel to guide them when working on a switchgear.

It is to be noted that when reference is made to a rule generation system for a low, medium or high voltage switchgear, this relates to a system to generate switchgear operations rules that relate to multiple different parts of the switchgear, such as: circuit breakers; earthing switches; disconnector switches; racking system; wiring circuits. In other words, rules that relate to a multitude of different service and operation requirements that are performed on switchgears.

In an example, the request is in a natural language.

In an example, the switchgear operation rule comprises computational code.

In an example, the switchgear operation rule comprises natural language.

In an example, the processing of the request by the large language model comprises generation of a preliminary switchgear operation rule. The output unit is configured to output the preliminary switchgear operation rule. The input unit is configured to receive an edit request from the operator for an edit to the preliminary switchgear operation rule. The generation of the switchgear operation rule comprises processing of the edit request by the large language model.

In this manner, human feedback is provided to fine tune the output of the LLM, thereby in effect validating the output of the LLM and mitigating the situation that can arise where LLMs generate incorrect or unreliable facts.

To put this another way, the LLM assists/guides an operator in the generation of rules that can be saved in a database, which can then be used to answer queries from the operator or other operator when working on the switchgear.

In an example, the preliminary switchgear operation rule comprises computational code.

In an example, the preliminary switchgear operation rule comprises natural language.

In an example, the edit request is in a natural language.

In an example, the large language model has been trained on a plurality of example rules relating to operation of the switchgear and associated domain information.

To put this another way, the LLM is finetuned/trained through the provision of contextual information in the form of examples and domain information, that could be in the form of vector embeddings, in order that desired results are generated.

Fig. 2 shows an example rule utilization system 200 for a low, medium or high voltage switchgear, comprising:
- a rule generation system 100 as described with respect to Fig. 1;
- a deterministic rule engine 40;
- an input unit 50; and
- an output unit 60.

The rule generation system is configured to generate a plurality of rules relating to operation of a switchgear. The rule generation system is configured to provide the plurality of rules to the deterministic rule engine. The input unit is configured to receive a request from an operator relating to operation of a switchgear. The input unit is configured to provide the request to the deterministic rule engine. The deterministic rule engine is configured to generate an operation action for the switchgear, and the generation of the operator action comprises utilization of the plurality of rules and the request. The output unit is configured to output the operation action.

Thus, the rule utilization system, that can be considered to be a deterministic rule engine, used by service personnel in order to gain guidance on how to service a switchgear can make use of rules generated by a rule generation system. In other words, a knowledge base used by the rule utilization system (the deterministic rule engine) is artificially generated, whereas normally the generation of this knowledge base is very difficult and very time consuming.

It is to be noted that when reference is made to a rule utilization system for a low, medium or high voltage switchgear, this relates to a system to utilize switchgear operations rules that relate to multiple different parts of the switchgear, such as: circuit breakers; earthing switches; disconnector switches; racking system; wiring circuits. In other words, rules that relate to a multitude of different service and operation requirements that are performed on switchgears.

In an example, the request is in a natural language.

In an example, the operation action is in a natural language.

Fig. 3 shows an example rule explanation system 300 for a low, medium or high voltage switchgear, comprising:
- a deterministic rule explainer 70;
- an input unit 80; and
- an output unit 90.

The input unit is configured to receive a request from an operator for a rule relating to operation of a switchgear. The input unit is configured to provide the request to the deterministic rule explainer. The deterministic rule explainer is configured to implement a large language model. The deterministic rule explainer is configured to determine a switchgear operation rule and generate an explanation of the switchgear operation rule, and the determination and generation comprises processing of the request by the large language model. The output unit is configured to output the explanation of the switchgear operation rule.

It is to be noted that the rule generation system 100 can be configured to operate as the rule explanation system 300.

In this manner, the rule explanation system is able to explain existing rule in a natural language, and a developer doesn't have to read and understand the code associated with a rule in order to determine what the rule does.

It is to be noted that when reference is made to a rule explanation system for a low, medium or high voltage switchgear, this relates to a system to explain switchgear operations rules that relate to multiple different parts of the switchgear, such as: circuit breakers; earthing switches; disconnector switches; racking system; wiring circuits. In other words, rules that relate to a multitude of different service and operation requirements that are performed on switchgears.

In an example, the request comprises natural language.

In an example, the request comprises computational code.

In an example, the explanation comprises natural language.

In an example, the explanation comprises computational code.

In an example, the processing of the request by the large language model comprises generation of a preliminary explanation of the switchgear operation rule. The output unit is configured to output the preliminary explanation of the switchgear operation rule. The input unit is configured to receive an edit request from the operator for an edit to the preliminary explanation of the switchgear operation rule. The generation of the explanation of the switchgear operation rule comprises processing of the edit request by the large language model.

In an example, the preliminary explanation of the switchgear operation rule comprises computational code.

In an example, the preliminary explanation of the switchgear operation rule comprises natural language.

In an example, the edit request is in a natural language.

In an example, the large language model has been trained on a plurality of example rules relating to operation of the switchgear and associated domain information.

In an example, a rule generation method for a low, medium or high voltage switchgear, is in effect associated with the rule generation system 100. The rule generation method comprises:
- receiving by an input unit a request from an operator for a rule relating to operation of a switchgear;
- providing the request to a deterministic rule generator, and wherein the deterministic rule generator is configured to implement a large language model,
- generating by the deterministic rule generator a switchgear operation rule, and wherein the generating the switchgear operation rule comprises processing the request by the large language model; and
- outputting by an output unit the switchgear operation rule.

In an example, the request is in a natural language.

In an example, the switchgear operation rule comprises computational code.

In an example, the switchgear operation rule comprises natural language.

In an example, the method comprises generating a preliminary switchgear operation rule, and outputting by the output unit the preliminary switchgear operation rule, and receiving by the input unit an edit request from the operator for an edit to the preliminary switchgear operation rule, and wherein the generating the switchgear operation rule comprises processing the edit request by the large language model.

In an example, the preliminary switchgear operation rule comprises computational code.

In an example, the preliminary switchgear operation rule comprises natural language.

In an example, the edit request is in a natural language.

In an example, the large language model has been trained on a plurality of example rules relating to operation of the switchgear and associated domain information.

In an example, a rule utilization method for a low, medium or high voltage switchgear, is in effect associated with the rule utilization system 200. The rule utilization method comprises:
- generating by a rule generating system 100 as described with respect to Fig. 1 according to the associated rule generation method a plurality of rules relating to operation of a switchgear;
- providing by the rule generating system the plurality of rules to a deterministic rule engine;
- receiving by an input unit a request from an operator relating to operation of a switchgear;
- providing by the input unit the request to the deterministic rule engine;
- generating by the deterministic rule engine an operation action for the switchgear, and wherein the generating the operator action comprises utilizing the plurality of rules and the request; and
- outputting by an output unit the operation action.

In an example, the request is in a natural language.

In an example, the operation action is in a natural language.

In an example, a rule explanation method for a low, medium or high voltage switchgear, is in effect associated with the rule explanation system 300. The rule explanation method comprises:
- receiving by an input unit a request from an operator for a rule relating to operation of a switchgear;
- providing by the input unit the request to a deterministic rule explainer, and wherein the deterministic rule explainer is configured to implement a large language model,
- determining by the deterministic rule explainer a switchgear operation rule and generating by the deterministic rule explainer an explanation of the switchgear operation rule, and wherein the determination and generation comprises processing the request by the large language model; and
- outputting by an output unit the explanation of the switchgear operation rule.

In an example, the request comprises natural language.

In an example, the request comprises computational code.

In an example, the explanation comprises natural language.

In an example, the explanation comprises computational code.

In an example, the method comprises generating a preliminary explanation of the switchgear operation rule, and outputting by the output unit the preliminary explanation of the switchgear operation rule, and receiving by the input unit an edit request from the operator for an edit to the preliminary explanation of the switchgear operation rule, and wherein the generation the explanation of the switchgear operation rule comprises processing the edit request by the large language model.

In an example, the preliminary explanation of the switchgear operation rule comprises computational code.

In an example, the preliminary explanation of the switchgear operation rule comprises natural language.

In an example, the edit request is in a natural language.

In an example, the large language model has been trained on a plurality of example rules relating to operation of the switchgear and associated domain information.

Thus, the inventors realized that Large Language Models (LLMs) like ChatGPT are a quick way to get answers for questions on any kind of topic. However, the inventors also realized that LLMs are known to fabricate facts and are thus not fully reliable and act as a black box, so no "debugging" is possible. Deterministic rules engines, as used by service personnel for help and guidance in servicing switchgears, depend on a collection of facts presented as rules (e.g., using Ontologies). However, building the knowledge base for such deterministic rules engines is quite time intensive. Thus, the inventors developed a new technique to leverage the ease of use of LLMs with the precision of deterministic tools by using the LLMs to support the creation of the rules.

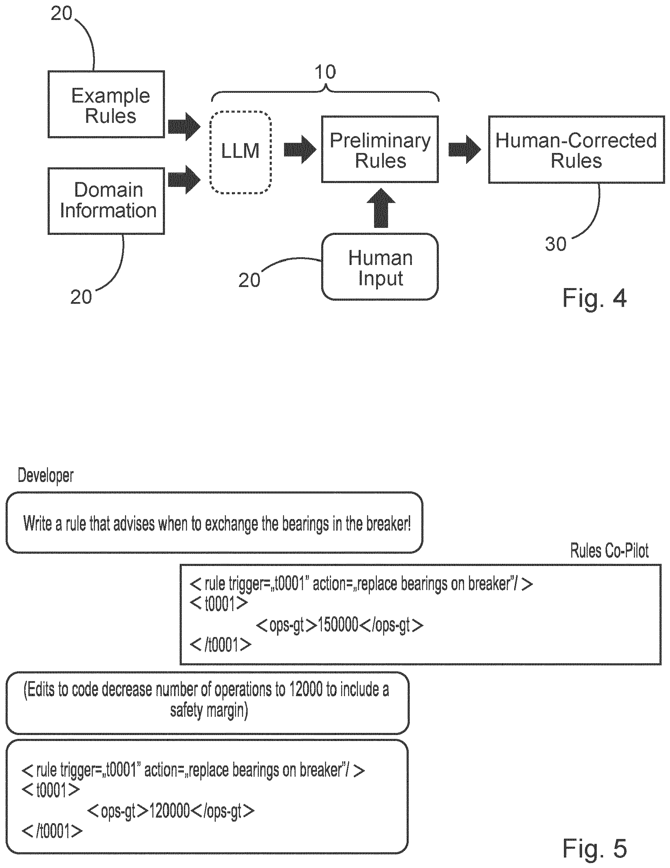

The rule generation system for a low, medium or high voltage switchgear, the rule utilization system for a low, medium or high voltage switchgear, the rule explanation system for a low, medium or high voltage switchgear, the rule generation method for a low, medium or high voltage switchgear, the rule utilization method for a low, medium or high voltage switchgear, and the rule explanation method for a low, medium or high voltage switchgear are now described in further detail, where reference is made to Figs. 4-6.

Fig. 4 shows a detailed example of a rule generation system.

Today, LLMs can be used to write code snippets that can be used by human programmers to write their own software more quickly. The inventors combined domain information and example rules, and then use the LLM to create preliminary rules suggestions for certain situations related to the domain - servicing of a switchgear.

Thus, as shown in shown in Fig. 4 and expanded upon in more detail in Fig. 5, a human expert will ask the LLM to provide the rules based on his or her idea about what is needed to be in the system. The human can look at the rules and fix them, create variants not covered, and even provide new rules that are still missing. The LLM can be used to generate preliminary rules. This LLM can be a pre-trained LLM, but does not need to be, trained on rule generation data set which is then fine-tuned on more prompt and corresponding generated rule pairs. The finetuned LLMs is provided with additional contextual information in the form of example rules and domain information in the terms of vector embeddings to generate the desired results.

Thus, Large Language Models (LLMs) like ChatGPT are a quick way to get answers for questions on any kind of topic, however LLMs are known to fabricate facts and are thus not fully reliable. Also, they are black boxes, so one cannot double check easily how they came to their conclusions.

The above described feedback mechanism, involving the generation of preliminary rules and feedback on those rules, addresses this negative aspect of LLMs.

Thus, a deterministic rules engine that serves as a support tool for the service personnel that can guide them, based on the state of the machine (e.g., Switchgears) on what actions need to be performed to maintain a machine, can be utilized with newly generated rule.

The deterministic rules engine can for example be a series of instructions on smartphone or something deployed on the machine to be serviced. Deterministic rules engines depend on a collection of facts presented as rules (e.g., using Ontologies). However, previously building the knowledge base was quite time intensive. Now, the rules used by the deterministic rules engine can be generated in a new way, as described above.

The new development can be part of an integrated development environment for deterministic rules. Fig. 5 shows a very simple example of how this tool could work. The developer writes, for example, a request for a rule that gives advice on when to exchange the bearings on the main shaft of a circuit breaker. The system proposes a rule that matches the chosen syntax (in this example a rather simple XML document). The developer who is also an expert in the domain decides to add a safety margin to the rule, decreasing the number of allowed operations.

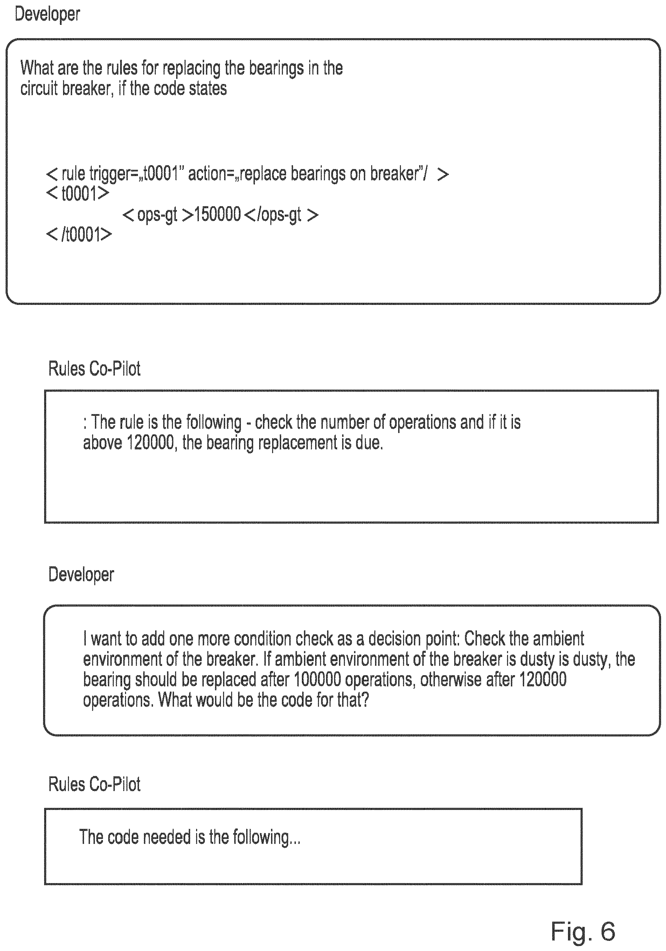

There can be variants to the new development:
- The rules can also be ontologies or similar data formats
- The system can write the full set of rules and then let the expert fix them
- The system can look at existing rules and suggest changes including explanations and references to documents that suggest the changes.
- The system can explain existing rules, as shown in Fig. 6.

Regarding Fig. 6, a rule generation system 100 - also called a CoPilot - can execute in effect an opposite scenario to rule generation and act as a rule explanation system 300. The CoPilot is able to explain existing rules in a natural language so that the developer doesn't have to "read" the code. This can be part of a conversation to change or extend rules. An example conversation is shown in Fig. 6

In another exemplary embodiment, a computer program or computer program element is provided that is characterized by being configured to execute the method steps of the method according to one of the preceding embodiments, on an appropriate processor or system.

The computer program element might therefore be stored on a computer unit, which might also be part of an embodiment. This computing unit may be configured to perform or induce performing of the steps of the method described above. Moreover, it may be configured to operate the components of the above described system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

### Reference Numerals

- 10: Deterministic Rule Generator
- 20: Input Unit
- 30: Output Unit
- 40: Deterministic Rule Engine
- 50: Input Unit
- 60: Output Unit
- 70: Deterministic Rule Explainer
- 80: Input Unit
- 90: Output Unit
- 100: Rule Generation System
- 200: Rule Utilization System
- 300: Rule Explanation System

## Claims

1. A rule generation system (100) for a low, medium or high voltage switchgear, comprising:
- a deterministic rule generator (10);
- an input unit (20); and
- an output unit (30);
wherein the input unit is configured to receive a request from an operator for a rule relating to operation of a switchgear;
wherein the input unit is configured to provide the request to the deterministic rule generator;
wherein the deterministic rule generator is configured to implement a large language model,
wherein the deterministic rule generator is configured to generate a switchgear operation rule, and wherein the generation of the switchgear operation rule comprises processing of the request by the large language model; and
wherein the output unit is configured to output the switchgear operation rule.

2. System according to claim 1, wherein the request is in a natural language.

3. System according to any of claims 1-2, wherein the switchgear operation rule comprises computational code.

4. System according to any of claims 1-3, wherein the switchgear operation rule comprises natural language.

5. System according to any of claims 1-4, wherein the processing of the request by the large language model comprises generation of a preliminary switchgear operation rule, wherein the output unit is configured to output the preliminary switchgear operation rule, wherein the input unit is configured to receive an edit request from the operator for an edit to the preliminary switchgear operation rule, and wherein the generation of the switchgear operation rule comprises processing of the edit request by the large language model.

6. System according to claim 5, wherein the preliminary switchgear operation rule comprises computational code.

7. System according to any of claims 5-6, wherein the preliminary switchgear operation rule comprises natural language.

8. System according to any of claims 5-7, wherein the edit request is in a natural language.

9. System according to any of claims 1-8, wherein the large language model has been trained on a plurality of example rules relating to operation of the switchgear and associated domain information.

10. A rule utilization system (200) for a low, medium or high voltage switchgear, comprising:
- a rule generation system (100) according to any of claims 1-9;
- a deterministic rule engine (40);
- an input unit (50); and
- an output unit (60);
wherein the rule generation system is configured to generate a plurality of rules relating to operation of a switchgear;
wherein the rule generation system is configured to provide the plurality of rules to the deterministic rule engine;
wherein the input unit is configured to receive a request from an operator relating to operation of a switchgear;
wherein the input unit is configured to provide the request to the deterministic rule engine;
wherein the deterministic rule engine is configured to generate an operation action for the switchgear, and wherein the generation of the operator action comprises utilization of the plurality of rules and the request; and
wherein the output unit is configured to output the operation action.

11. A rule explanation system (300) for a low, medium or high voltage switchgear, comprising:
- a deterministic rule explainer (70);
- an input unit (80); and
- an output unit (90);
wherein the input unit is configured to receive a request from an operator for a rule relating to operation of a switchgear;
wherein the input unit is configured to provide the request to the deterministic rule explainer;
wherein the deterministic rule explainer is configured to implement a large language model,
wherein the deterministic rule explainer is configured to determine a switchgear operation rule and generate an explanation of the switchgear operation rule, and wherein the determination and generation comprises processing of the request by the large language model; and
wherein the output unit is configured to output the explanation of the switchgear operation rule.

12. A rule generation method for a low, medium or high voltage switchgear, comprising:
- receiving by an input unit a request from an operator for a rule relating to operation of a switchgear;
- providing the request to a deterministic rule generator, and wherein the deterministic rule generator is configured to implement a large language model,
- generating by the deterministic rule generator a switchgear operation rule, and wherein the generating the switchgear operation rule comprises processing the request by the large language model; and
- outputting by an output unit the switchgear operation rule.

13. A rule utilization method for a low, medium or high voltage switchgear, comprising:
- generating by a rule generating system according to the rule generation method of claim 12 a plurality of rules relating to operation of a switchgear;
- providing by the rule generating system the plurality of rules to a deterministic rule engine;
- receiving by an input unit a request from an operator relating to operation of a switchgear;
- providing by the input unit the request to the deterministic rule engine;
- generating by the deterministic rule engine an operation action for the switchgear, and wherein the generating the operator action comprises utilizing the plurality of rules and the request; and
- outputting by an output unit the operation action.

14. A rule explanation method for a low, medium or high voltage switchgear, comprising:
- receiving by an input unit a request from an operator for a rule relating to operation of a switchgear;
- providing by the input unit the request to a deterministic rule explainer, and wherein the deterministic rule explainer is configured to implement a large language model,
- determining by the deterministic rule explainer a switchgear operation rule and generating by the deterministic rule explainer an explanation of the switchgear operation rule, and wherein the determination and generation comprises processing the request by the large language model; and
- outputting by an output unit the explanation of the switchgear operation rule.

15. A computer program element for controlling a processor to carry out the method of any of claims 12-14.
